# EUROPÄISCHE PATENTSCHRIFT

(11) **EP 2 453 504 B1**
(45) Veröffentlichungstag und Bekanntmachung des Hinweises auf die Patenterteilung: **07.01.2015**
(21) Anmeldenummer: 11008722.8
(22) Anmeldetag: 02.11.2011
(51) Int. Cl.: H01M 2/36, H01M 2/12, H01M 2/04, H01M 2/10

(54) **Akkumulator**
Accumulator
Accumulateur

(30) Priorität: 15.11.2010 DE 202010015495 U
(43) Veröffentlichungstag der Anmeldung: 16.05.2012
(73) Patentinhaber: HOPPECKE Batterien GmbH & Co. KG, 59929 Brilon (DE)
(72) Erfinder: Kesper, Heinrich, Dipl.-Ing., 34508 Willingen (DE)
(74) Vertreter: Stenger, Watzke & Ring

(56) Entgegenhaltungen:
- EP-A1- 0 503 264
- EP-B1- 1 665 415
- GB-A- 1 232 059
- GB-A- 1 268 097
- US-A1- 2006 141 342

## Beschreibung

Die Erfindung betrifft einen Akkumulator, insbesondere eine Starterbatterie, mit einem Gehäuse und einem das Gehäuse fluiddicht verschließenden Gehäusedeckel, wobei innerhalb des Gehäuses einander abwechselnd positive und negative Elektroden sowie ein die Elektroden umgebener Elektrolyt angeordnet sind, aufweisend einen als Ausgleichsbehälter für den Elektrolyt dienenden Zusatzbehälter, wobei der von dem Zusatzbehälter bereitgestellte Volumenraum einerseits und der vom Gehäuse bereitgestellte Volumenraum andererseits in strömungstechnischer Verbindung stehen, wobei der Zusatzbehälter am Gehäusedeckel angeordnet ist,

Akkumulatoren der vorbeschriebenen Art sind aus dem Stand der Technik an sich gut bekannt, weshalb es eines gesonderten druckschriftlichen Nachweises an dieser Stelle nicht bedarf. Lediglich exemplarisch sei hier die GB 1 268 097 A genannt.

Das grundsätzliche Problem bei Akkumulatoren der vorgenannten Art besteht darin, dass selbst bei einem bestimmungsgemäßen Betrieb des Akkumulators - sei es die Ladung oder die Beladung -, Wasser vom Elektrolyten abgegeben wird, und zwar in Form von während der Elektrolyse entstehendem Sauerstoff einerseits und Wasserstoff andererseits. Die Abgabe erfolgt über eine im Gehäusedeckel des Akkumulators vorgesehene Entgasungsöffnung.

Das infolge der Elektrolyse abgegebene Wasser muss ersetzt werden. Zu diesem Zweck sind entsprechende Wartungen vorzunehmen, die in wiederkehrenden Intervallen durchzuführen sind. Dies ist aufwendig, weshalb das Bestreben besteht, den Wartungsaufwand zu minimieren.

Es ist bereits vorgeschlagen worden, den Akkumulator mit einem Reservoir für nachzufüllendes Wasser auszurüsten. Zu diesem Zweck ist vorgeschlagen worden, einen zusätzlichen Wassertank deckelseitig des Akkumulators anzuordnen. Im Bedarfsfall - so die Idee - kann Wasser aus dem Reservoir in den Akkumulator nachströmen. In der Praxis konnte sich diese Ausgestaltung nicht durchsetzen, da es dem Grunde nach nicht möglich ist, die exakte Menge an verloren gegangenem Wasser zu bestimmen.

So zeigt die GB 1 268 097 A eine Batterie mit einem als Reservoir dienenden Zusatzbehälter. Der Zusatzbehälter ist bestimmungsgemäß mit Batterieflüssigkeit, beispielsweise destilliertem Wasser befüllt und auf das Gehäuse der Batterie aufgesetzt. Ein Verbindungsrohr verbindet dabei das Batteriegehäuse mit dem Zusatzbehälter. Im Verbindungsrohr sind Prallbleche angeordnet, welche als Flüssigkeitsabscheider dienen.

Aus dem Stand der Technik sind ferner sogenannte Rekombinationseinheiten bekannt geworden. Diese dienen dazu, die aus einem Akkumulator austretenden Gase, Sauerstoff und Wasserstoff zu Wasser zu rekombinieren und das auf diese Weise wieder gewonnene Wasser zurück in den Akkumulator zu führen. Es ist allerdings nicht eine vollständige Rückführung möglich, weshalb auch mit Rekombinationseinrichtungen ausgerüstete Akkumulatoren nach wie vor einer Wartung bedürfen. Es besteht insofern auch bei mit Rekombinationseinrichtungen ausgerüsteten Akkumulatoren die Bestrebung, den Wartungsaufwand weiterhin zu minimieren.

Es ist ausgehend vom vorbeschriebenen Stand der Technik die **Aufgabe** der Erfindung, einen Akkumulator der eingangsgenannten Art dahingehend weiterzuentwickeln, dass der Wartungsaufwand minimiert werden kann.

Zur Lösung dieser Aufgabe wird mit der Erfindung ein Akkumulator gemäß Anspruch 1 vorgeschlagen. Der Akkumulator nach der Erfindung ist mit einem Zusatzbehälter ausgerüstet. Dieser ist bevorzugter Weise deckelseitig des Akkumulators angeordnet und stellt ein Zusatzvolumen bereit. Dabei dient der Zusatzbehälter als Ausgleichsbehälter für den Elektrolyt. Zu diesem Zweck ist eine strömungstechnische Verbindung zwischen dem Zusatzbehälter einerseits und dem Akkumulatorgehäuse andererseits vorgesehen, so dass im Bedarfsfall der Elektrolyt aus dem Akkumulatorgehäuse in den Zusatzbehälter und umgekehrt strömen kann.

Der nach der Erfindung vorgesehene Zusatzbehälter dient nicht als Reservoir für im Bedarfsfall nachzuführendes Wasser. Er ist als Ausgleichsbehälter für den Elektrolyten vorgesehen. Der im Akkumulatorgehäuse vorgesehene Elektrolyt kann also im Bedarfsfall in den Zusatzbehälter einströmen. Der Zusatzbehälter stellt insofern ein Ausgleichsvolumen zur Verfügung. Sollte dieses vom Zusatzbehälter bereitgestellte Ausgleichsvolumen nicht mehr benötigt werden, erfolgt eine Rückströmung des Elektrolyten aus dem Zusatzbehälter in das Akkumulatorgehäuse.

Aus dem Stand der Technik vorbekannte Akkumulatoren verfügen in an sich bekannter Weise über Elektroden. Diese sind im Akkumulatorgehäuse angeordnet und werden von dem ebenfalls im Akkumulatorgehäuse vorgesehenen Elektrolyt umgeben. Für einen bestimmungsgemäßen Betrieb des Akkumulators ist so viel Elektrolyt vorzusehen, dass die Elektroden bis zu ihrer oberen Abschlusskante vom Elektrolyt umgeben sind. Idealerweise fällt der Elektrolytspiegel mit der oberen Abschlusskante der Elektroden zusammen.

Auch während einer bestimmungsgemäßen Verwendung des Akkumulators kann es zu Erschütterungen desselben kommen. Infolge derartiger Erschütterungen schwappt der im Akkumulatorgehäuse befindliche Elektrolyt hin und her. Dabei kann es zu sogenannten Schwappwellen kommen. Da der Akkumulatordeckel zum Abführen von bei der Elektrolyse entstehendem Wasserstoff und Sauerstoff über entsprechende Entgasungsöffnungen verfügt, kann es beim Aufkommen von Schwappwellen zu einem Austritt von Elektrolyt aus den Entgasungsöffnungen kommen. Um dies zu vermeiden, ist ein freier Volumenraum zwischen der Unterkante des Deckels des Gehäuses und der oberen Randkante der Elektroden vorgesehen. Dieser freie Volumenraum dient als Schwappraum, so dass im Falle einer Erschütterung des Akkumulators entstehende Schwappwellen abgebaut werden können, ohne dass die Gefahr eines Austritts von Elektrolyt aus einer der Entgasungsöffnungen besteht.

Der freie Volumenraum oberhalb der Randkante der Elektroden dient noch einem weiteren Zweck:

Im Zuge einer bestimmungsgemäßen Ladung sammelt sich schwere Säure innerhalb des Elektrolyten bodenseitig des Gehäuses an. Diese schwere Säure ist zur gleichmäßigen Durchmischung des Elektrolyten zu verteilen. Dies geschieht durch z.B. beim Laden des Akkumulators in den Elektrolyt eingebrachte Luftblasen. Diese werden bodenseitig in den Elektrolyt eingeleitet und steigen im Elektrolyt nach oben, was dann zu einer Durchmischung des Elektrolyts und einer Verteilung der schweren Säure führt. Das Einbringen der Luftblasen bewirkt eine Elektrolytverdrängung, was den Elektrolytspiegel während eines Ladevorganges ansteigen lässt. Dieser beim Ladevorgang ansteigende Elektrolytspiegel wird vom freien Volumenraum zwischen der oberen Abschlusskante der Elektroden und dem Akkumulatordeckel, das heißt dem Schwappraum aufgenommen.

Der erfindungsgemäß vorgesehene Zusatzbehälter gestattet es nun, dass der Elektrolyt in einer die für einen ordnungsgemäßen Betrieb erforderliche Mindestmenge übersteigenden Menge vorgesehen ist. Das Akkumulatorgehäuse nimmt also mehr Elektrolyt auf, als für einen ordnungsgemäßen Betrieb mindestens erforderlich ist. Dabei wird der vorerläuterte Schwappraum, das heißt der Volumenraum zwischen der oberen Randkante der Elektroden einerseits und der Unterseite des Deckels andererseits zur Aufnahme von zusätzlichem Elektrolyt genutzt.

Die Aufnahme von im Unterschied zum Stand der Technik zusätzlichem Elektrolyt bietet den Vorteil, dass die Wartungsintervalle deutlich gestreckt werden können, was den Wartungsaufwand minimiert. Dabei wird die Streckung der Wartungsintervalle dadurch erreicht, dass durch das Mehr an Elektrolyt die bei einem bestimmungsgemäßen Gebrauch des Akkumulators abgegebene Menge an Wasser von vornherein ausgeglichen ist. Es wird also von vornherein so viel Elektrolyt in das Akkumulatorgehäuse eingegeben, dass zunächst einmal Elektrolyt verbraucht werden kann, ohne dass die im Akkumulator notwendiger Weise für einen ordnungsgemäßen Betrieb erforderliche Mindestmenge an Elektrolyt unterschritten wird.

Da der erfindungsgemäße Akkumulator zur Verlängerung der Wartungsintervalle mit einem im Unterschied zum Stand der Technik vergrößerten Elektrolytvolumen betrieben wird, steht beim erfindungsgemäßen Akkumulator im Unterschied zum Stand der Technik der "Schwappraum" nicht mehr zur Verfügung. Erfindungsgemäß ist deshalb der Zusatzbehälter vorgesehen, der dieses weggefallene Ausgleichsvolumen ersetzt. Dabei sind die Volumenverhältnisse erfindungsgemäß derart aufeinander abgestimmt, dass im Zuge einer bestimmungsgemäßen Verwendung des Akkumulators der Zusatzbehälter keine Verwendung findet. Die Volumenausnutzung ist also derart gewählt, dass im Zuge einer bestimmungsgemäßen Verwendung der Elektrolyt vollständig im Akkumulatorgehäuse verbleibt. Der als Ausgleichsbehälter für den Elektrolyt dienende Zusatzbehälter kommt erst dann zum Einsatz, wenn ungewollte Schwankungen im Elektrolytspiegel also ausgeglichen werden müssen. Infolge derartiger Erschütterungen kann es zu einem Überschwappen des Elektrolyten kommen. Durch den Zusatzbehälter kann dies abgefangen werden.

Obgleich es die erfindungsgemäße Ausgestaltung ermöglicht, die Wartungsintervalle zu verlängern, ist eine Wartung nach wie vor erforderlich. Im Rahmen von Wartungsarbeiten kann es bei unsachgemäßer Handhabung gegebenenfalls dazu kommen, dass im Zuge der Elektrolytauffüllung zu viel Wasser nachgefüllt wird. Auch in diesem Fall dient der Zusatzbehälter als Ausgleichsbehälter, da er es gestattet, entsprechende Mengen an Elektrolyt aufzunehmen, bis sich eine durch einen Betrieb des Akkumulators verringerte Elektrolytmenge von allein einstellt.

Ferner dient der erfindungsgemäße Zusatzbehälter als Ausgleichsvolumen zur Aufnahme von Elektrolyt während eines Ladevorgangs, wenn zur Durchmischung des Elektrolyts Luftblasen in selbigen eingebracht werden. Insbesondere wenn die Luftblaseneinspeisung unsachgerecht zu hoch ausfällt, das heißt der Elektrolytspiegel während des Ladevorgangs ungewollt hoch ansteigt, dient der Zusatzbehälter als Ausgleichsbehälter.

Die erfindungsgemäße Ausgestaltung gestattet es insgesamt, den vom Akkumulatorgehäuse bereitgestellten Volumenraum für eine zusätzliche Aufnahme von Elektrolyt zu nutzen. In der Konsequenz können die Wartungsintervalle verlängert und damit der Wartungsaufwand minimiert werden. Dabei sind die Volumenverhältnisse derart aufeinander abgestimmt, dass der Elektrolyt bei einem bestimmungsgemäßen Betrieb des Akkumulators vollständig im Akkumulatorgehäuse verbleibt. Insbesondere bei Erschütterungen des Akkumulators und/oder beim Ladevorgang kann es aber zu einem Ansteigen des Elektrolytspiegels kommen. Der Zusatzbehälter dient in diesem Fall als Ausgleichsbehälter für den Elektrolyt. Dies in der Weise, als dass der Elektrolyt aus dem Akkumulatorgehäuse in den Zusatzbehälter einströmen kann. Sinkt der Elektrolytspiegel wieder, so strömt der vom Zusatzbehälter temporär aufgenommene Elektrolyt zurück in das Akkumulatorgehäuse.

Damit im bestimmungsgemäßen Verwendungsfall Elektrolyt in den Ausgleichsbehälter einströmen kann, verfügt dieser über eine Entlüftungsöffnung. Durch diese Entlüftungsöffnung können natürlich auch die bei einer bestimmungsgemäßen Verwendung infolge der Elektrolyse freiwerdende Gase Sauerstoff und Wasserstoff austreten, wie es insbesondere bei einem Ladevorgang der Fall ist. An diesen austretenden Gasen hängen Säurepartikel. Da es bestrebt ist, die Säurepartikel vorzugsweise an einem Austreten aus der Batterie zu hindern, wird mit der Erfindung vorgeschlagen, dass in einem Überströmungskanal zwischen dem Zusatzbehälter und dem Gehäuse des Akkumulators ein Flüssigkeitsabscheider vorgesehen ist. Dieser Flüssigkeitsabscheider kann durch stabförmige Lamellen gebildet sein, die eine Art Prallfläche darstellen, an der die Säurepartikel beim Durchströmen des Gases anhaften und somit abgeschieden werden, was eine Rückführung in den Akkumulator gestattet.

Es hat sich gezeigt, dass insbesondere bei schweren Erschütterungen des Akkumulators Elektrolyt über die Entlüftungsöffnung des Zusatzbehälters austreten kann. Es wird deshalb mit einem weiteren Merkmal der Erfindung vorgeschlagen, dass im Überströmungskanal zwischen Zusatzbehälter einerseits und Akkumulatorgehäuse andererseits eine Labyrinthführung vorgesehen ist. Diese Labyrinthführung dient dazu, den vom Elektrolyt bis zur Entlüftungsöffnung zu nehmenden Strömungsweg zu verlängern. Damit wird die Gefahr minimiert, dass Elektrolyt auch bei schweren Erschütterungen des Akkumulators austritt. Die Labyrinthführung dient darüber hinaus als zusätzlicher Flüssigkeitsabscheider, da auch die Labyrinthführung zusätzliche Prallflächen zur Verfügung stellt, an denen sich von einem austretenden Gas mitgerissene Säurepartikel abscheiden können.

Der Zusatzbehälter besteht gemäß einem weiteren Merkmal der Erfindung aus Kunststoff und ist vorzugsweise deckelseitig des Akkumulators angeordnet. Dabei besteht der Zusatzbehälter aus einem Gehäuseteil einerseits und einem das Gehäuseteil fluiddicht verschließenden Deckel.

Der Deckel des Zusatzbehälters besteht bevorzugter Weise aus einem Thermoplast. Im montierten Zustand liegt die obere Abschlusskante der Labyrinthführung innenseitig des Deckels an, wodurch eine Abdichtung erreicht ist. Bei der Verwendung eines thermoplastischen Materials für den Deckel wird der so erreichte Dichteffekt noch optimiert.

Der Deckel ist bevorzugter Weise über das Gehäuseteil des Zusatzbehälters hinausragend ausgebildet. Der Deckel deckt damit nicht nur das Gehäuseteil, sondern auch einen sich an das Gehäuseteil anschließenden Randbereich ab. Diese Ausgestaltung wird insbesondere aus optischen Gründen bevorzugt, da am Gehäuseteil vorbei geführte Zuleitungen, beispielsweise luftführende Leitungen optisch abgedeckt werden können, was den optischen Gesamteindruck in Draufsicht auf den Akkumulator aufwertet.

Der Zusatzbehälter kann unabhängig vom Akkumulatortyp eingesetzt werden, das heißt mit Akkumulatoren unterschiedlichen Typs kombiniert werden. Entscheidend ist, dass der mit dem Akkumulator kombinierte Zusatzbehälter ein Zusatzvolumen bereitstellt, das als Ausgleichsbehälter für den im Akkumulator befindlichen Elektrolyt dient. Insofern gestattet der Zusatzbehälter die Nachrüstung, was es wiederum erlaubt, auch bereits im Einsatz befindliche Akkumulatoren mit einem Zusatzvolumen an Elektrolyt zur Verlängerung der Wartungsintervalle zu betreiben. Mit der Erfindung wird deshalb auch ein System vorgeschlagen, dass einen Akkumulator sowie einen Zusatzbehälter der vorbeschriebenen Art aufweist.

Weitere Vorteile und Merkmale der Erfindung ergeben sich aus der nachfolgenden Beschreibung anhand der Figuren. Dabei zeigen
- Figur 1: in schematischer Schnittdarstellung einen Akkumulator nach der Erfindung;
- Figur 2: in schematisch perspektivischer Darstellung einen Zusatzbehälter nach der Erfindung;
- Figur 3: in schematisch perspektivischer Darstellung den Zusatzbehälter nach Figur 1 in einer Ansicht von unten;
- Figur 4: in schematischer Perspektivdarstellung das Gehäuseteil des Zusatzbehälters;
- Figur 5: in schematischer Perspektivdarstellung den Deckel des Zusatzbehälters und
- Figur 6: in geschnittener Seitenansicht den Zusatzbehälter nach Figur 1

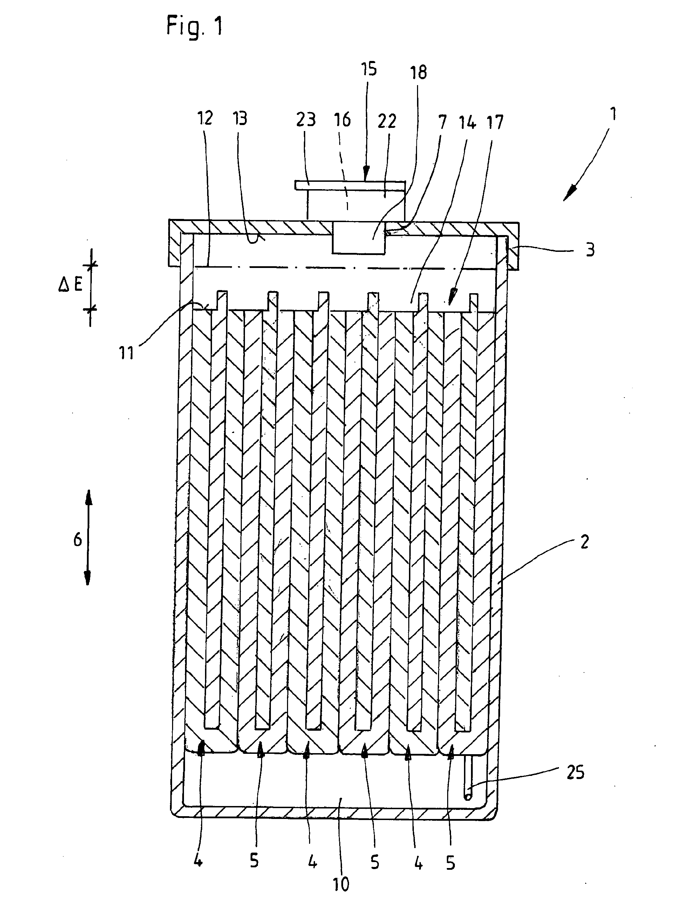

Figur 1 lässt in schematischer Schnittdarstellung einen Akkumulator 1 erkennen. Der Akkumulator 1 verfügt über ein Gehäuse 2, das fluiddicht mittels eines Gehäusedeckels 3 verschlossen ist. Innerhalb des Gehäuses 2 sind positive Elektroden 4 und negative Elektroden 5 einander abwechselnd angeordnet. Innerhalb des Gehäuses 2 ist ferner ein Elektrolyt 10 vorgesehen, der die Elektroden 4 und 5 umgibt.

Die Elektroden 4 und 5 bilden oberseitig eine gemeinsame Randkante 11 aus. Für einen ordnungsgemäßen Betrieb des Akkumulators 1 ist es erforderlich, dass sich im Gehäuse 2 so viel Elektrolyt 10 befindet, dass die Elektroden 4 und 5 vollständig vom Elektrolyt 10 umgeben sind. Idealerweise fällt der Elektrolytspiegel mit der oberen Randkante 11 der Elektroden 4 und 5 zusammen.

Mit der Erfindung wird nun vorgeschlagen, den ansonsten freibleibenden Volumenraum 17 des Gehäuses 2, der sich in Höhenrichtung 6 zwischen der oberen Randkante 11 der Elektroden 4 und 5 einerseits und der Unterseite 13 des Gehäusedeckels 3 andererseits erstreckt, zumindest teilweise mit Elektrolyt zu befüllen, beispielsweise bis zum Erreichen des Elektrolytspielgels 12. Für einen bestimmungsgemäßen Betrieb des Akkumulators 1 wird dieses zusätzliche Elektrolytvolumen 14 nicht benötigt. Es gestattet aber einen längeren ordnungsgemäßen Betrieb des Akkumulators 1, da ein Verlust an Wasser durch Elektrolyse bereits durch das Mehr an eingefülltem Elektrolyt 10 ausgeglichen ist. Erst wenn der Elektrolytspiegel einen Stand unterhalb der oberen Randkante 11 der Elektroden 4 und 5 erreicht, bedarf es einer Auffüllung des Elektrolyten 10.

Das gezeigte Ausführungsbeispiel lässt erkennen, dass zur Verlängerung der Wartungsintervalle so viel Elektrolyt 10 in das Gehäuse 2 des Akkumulators 1 eingefüllt ist, dass der sich einstellende Elektrolytspiegel 12 um die Differenz ΔE oberhalb der oberen Randkante 11 der Elektroden 4 und 5 liegt.

Infolge einer schweren Erschütterung des Akkumulators 1 und/oder beim Aufladevorgang kann es dazu kommen, dass der Elektrolytspiegel ansteigt. Um ein solches Ansteigen des Elektrolytspiegels abfangen zu können, ist erfindungsgemäß ein Zusatzbehälter 15 vorgesehen, der deckelseitig des Akkumulators 1 angeordnet ist. Dieser Zusatzbehälter 15 stellt in Form eines Volumenraums 16 ein Ausgleichsvolumen für den Elektrolyt 10 bereit. Sollte es zu einem Ansteigen des Elektrolytspiegels kommen, so kann der Elektrolyt 10 in den Zusatzbehälter 15 einströmen. Sinkt der Elektrolytspiegel wieder ab, so strömt der vom Zusatzbehälter 15 temporär aufgenommene Elektrolyt 10 zurück in das Akkumulatorgehäuse 2.

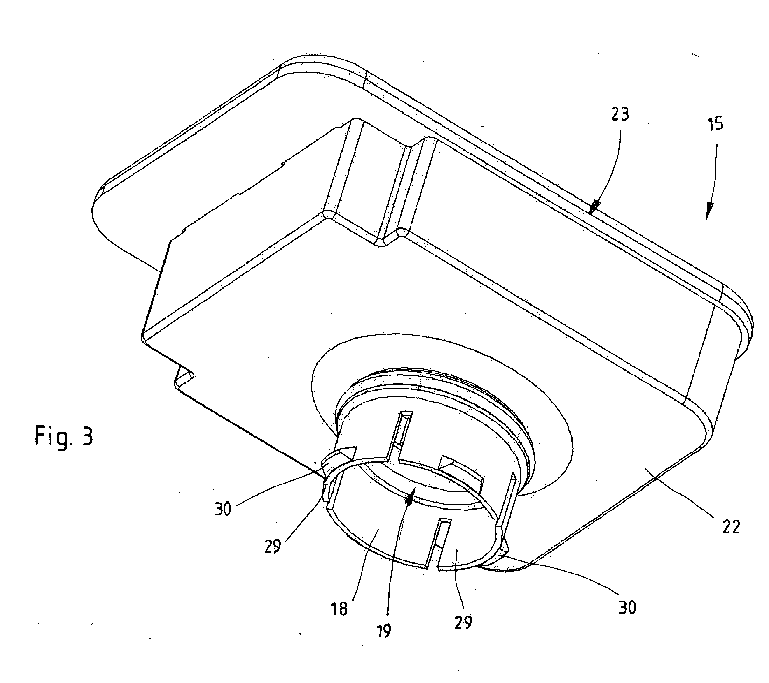

Der Zusatzbehälter 15 verfügt im dargestellten Ausführungsbeispiel über einen Stutzen 18. Im montierten Zustand ist der Stutzen 18 in eine dafür vorgesehene Bohrung 7 des Akkumulatordeckels 3 eingebracht. Figur 3 lässt den Stutzen 18 erkennen.

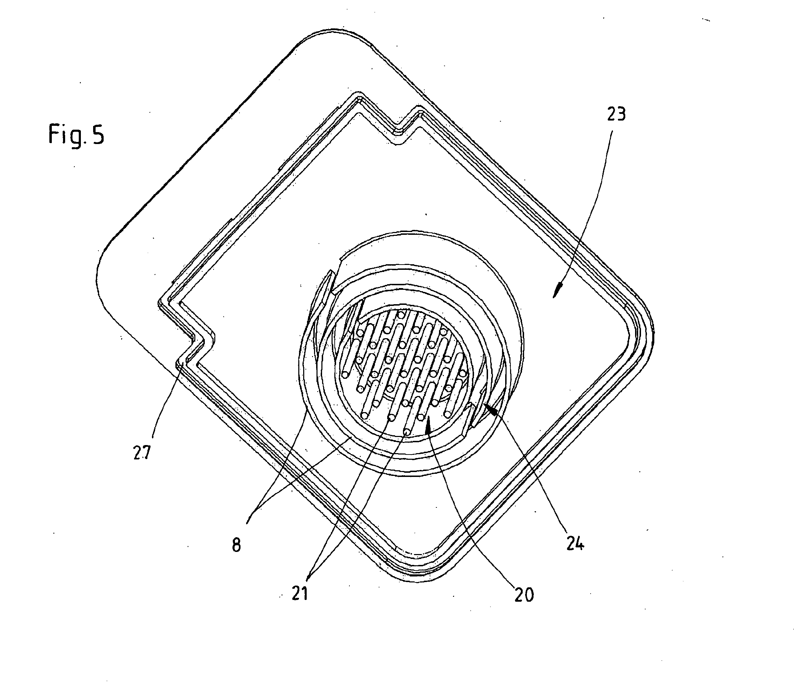

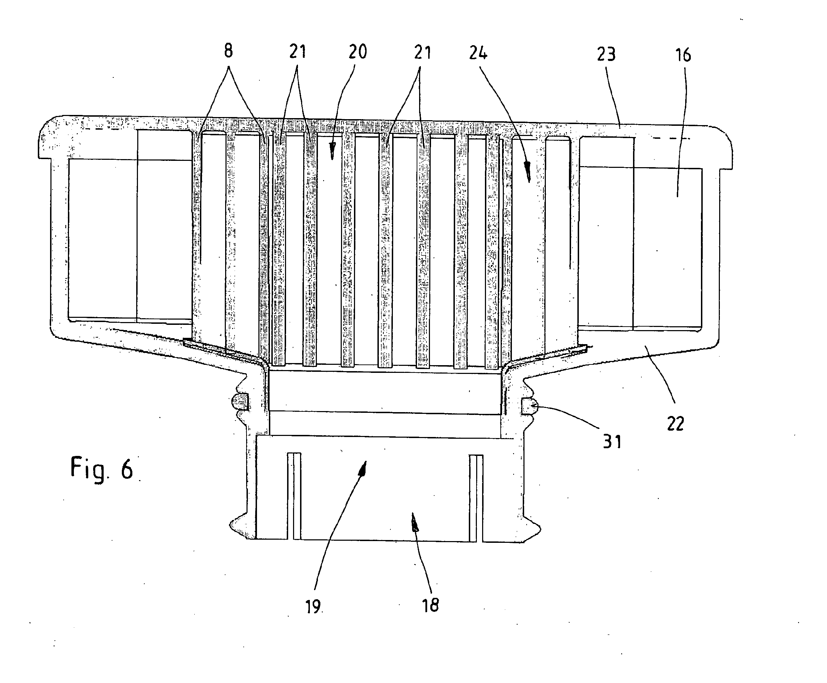

Wie sich aus Figur 5, und ebenso Figur 6 entnehmen lässt, sind in dem vom Zusatzbehälter 15 bereitgestellten Überströmungskanal 19 Stäbchen 21 angeordnet. Diese dienen als zusätzliche Prallfläche für in den Zusatzbehälter 15 eingeführte Gase. Von den Gasen mitgerissene Säurepartikel bleiben an den Stäbchen 21 hängen und können in den Akkumulator zurückgeführt werden. Insofern stellen die Stäbchen 21 einen Flüssigkeitsabscheider 20 dar.

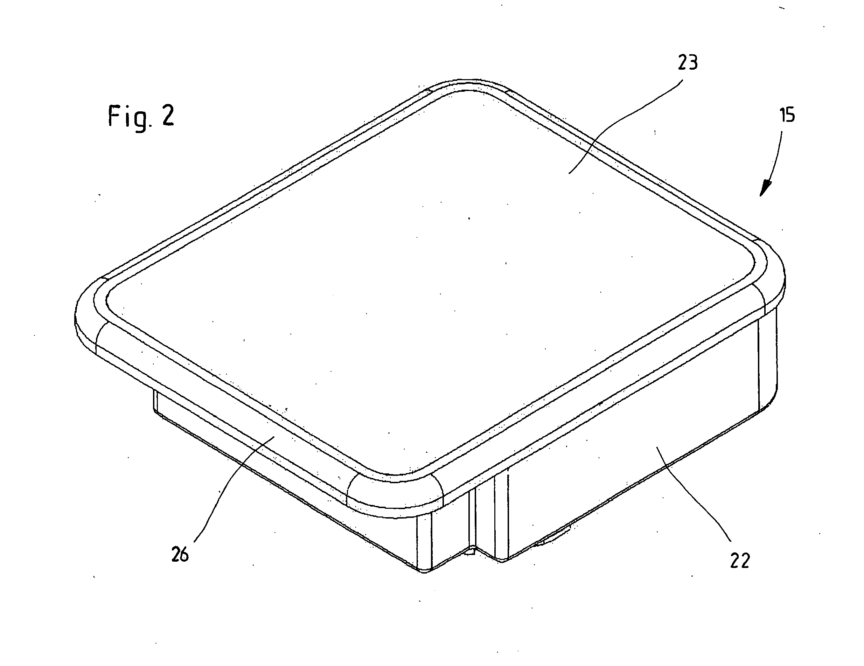

Der Zusatzbehälter 15 ist in den Figuren 2 bis 6 im Detail dargestellt. Es ist zu erkennen, dass der Zusatzbehälter 15 über ein Gehäuseteil 22 verfügt. Dieses schließt sich an den Stutzen 18 an. Innerhalb des Gehäuseteils 22 ist eine Labyrinthführung 24 vorgesehen. Diese Labyrinthführung wird durch konzentrisch ausgebildete Wandabschnitte 8 gebildet, die oberseitig mittels des Deckels 23 des Zusatzbehälters 15 dicht abgeschlossen sind. Zu diesem Zweck sind der Deckel 23 und die Wandabschnitte 8 im geeigneten Ausführungsbeispiel einstückig ausgebildet.

Der Sinn und Zweck der Labyrinthführung 24 besteht darin, den Strömungsweg für in den Zusatzbehälter 15 einströmenden Elektrolyt 10 zu verlängern, so dass ein ergänzender Austrittsschutz geschaffen ist. Im Übrigen dient die Labyrinthführung 24 auch als Flüssigkeitsabscheider für über den Zusatzbehälter 15 austretende Gase.

Wie der schematischen Schnittdarstellung nach Figur 1 entnommen werden kann, überragt der Deckel 23 des Zusatzbehälters 15 das Gehäuseteil 22 einendseitig. Auf diese Weise wird ein dem Gehäuseteil nebengeordneter Bereich geschaffen, der oberseitig vom Deckel 23 gleichfalls abgedeckt ist, wie sich insbesondere aus der Darstellung nach Figur 3 ergibt. Dieser Teil unterhalb des Deckels 23 kann beispielsweise dazu genutzt werden, Zuführungsleitungen beispielsweise zum Luftröhrchen 25 oberseitig abzudecken.

Das Luftröhrchen 25 dient dem Einbringen von Luftblasen während des Ladevorgangs. Bodenseitig des Gehäuses 2 befindliche schwere Säure wird durch Einbringen von Luftblasen durch das Luftröhrchen 25 aufgemischt und gleichmäßig im Elektrolyt 10 verteilt, wobei sich infolge des Einbringens von Luftbläschen ein Anheben des Elektrolytspiegels 12 ergibt, was im Zweifel, wenn beispielsweise zu viel oder zu große Luftblasen eingebracht werden, über den vom Zusatzbehälter 15 bereitgestellten Volumenraum 16 ausgeglichen werden kann.

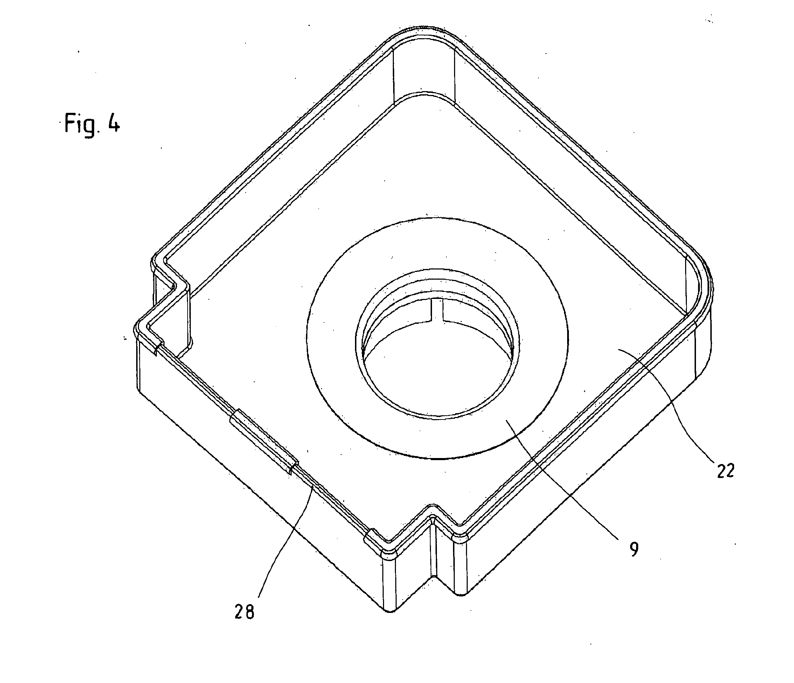

Gemäß der in den Figuren 2 bis 6 dargestellten Ausführungsform verfügt der Deckel 23 des Zusatzbehälters 15 über eine umlaufende Dichtung 26. Diese Dichtung ist mit Bezug auf die Bildebene nach Figur 2 unterseitig mit einer umlaufenden Aufnahme 27 ausgebildet, wie sich dies insbesondere aus der Darstellung nach Figur 5 ergibt. Im endmontierten Zustand greift in diese Ausnehmung 27 die obere Randkante 28 des Gehäuseteils 22 ein, wie eine Zusammenschau der Figuren 4 und 5 sowie 2 zeigt. In dem endmontierten Zustand nach Figur 2 sind das Gehäuseteil 2 und der Deckel 23 fluiddicht miteinander verbunden.

Der Deckel 23 trägt innenseitig einstückig damit ausgebildet sowohl die Labyrinthführung 24 als auch den Flüssigkeitsabscheider 20. Dies ergibt sich am besten aus der Darstellung nach Figur 5. Im endmontierten Zustand liegen die Wandabschnitte 8 der Labyrinthführung 24 gehäuseteilseitig auf einer Dichtung 9 auf, die vom Gehäuseteil 22 getragen wird. Dieser Zusammenhang ergibt sich am besten aus der Darstellung nach den Figuren 4 und 6, wobei der Darstellung nach Figur 4 die Anordnung der Dichtung 9 und der Figur 6 das Zusammenwirken der Wandabschnitte 8 mit der Dichtung 9 zu entnehmen ist.

Die abdichtende Ausgestaltung der Labyrinthführung 24 sorgt dafür, dass in den Zusatzbehälter 15 einströmende Gase nur den von der Labyrinthführung 24 vorgegebenen Strömungsweg beschreiten können.

Gemäß einer alternativen Ausgestaltung der Erfindung kann auch vorgesehen sein, dass die Labyrinthführung 24 einstückig mit dem Gehäuseteil 22 ausgebildet ist. In diesem Fall erfolgt eine oberseitige Abdichtung der Labyrinthführung 24 durch ein entsprechendes Dichtmittel, welches beispielsweise durch den Deckel 23 gegeben sein kann.

Zur Anordnung des Zusatzbehälters 15 in der Bohrung 7 des Akkumulatordeckels 3 dient der vom Gehäuseteil 22 bereitgestellte Stutzen 18. Dieser ist mit einem Dichtring 31 ausgerüstet, so dass ein fluiddichtes Einsetzen des Stutzens 18 in die zugehörige Bohrung 7 ermöglicht ist.

Der Stutzen 18 verfügt gehäuseseitig über Rastfortsätze 29, wie sich dies insbesondere aus der Darstellung nach Figur 3 ergibt. Die Rastfortsätze 29 können federelastisch einbiegen. Sie tragen einendseitig Rastnocken 30, die im endmontierten Zustand den Gehäusedeckel 3 bohrungsausgangsseitig hintergreifen. Auf diese Weise wird eine sichere, zugleich aber auch lösbare Verbindung zwischen dem Zusatzbehälter 15 einerseits und dem Gehäusedeckel 3 des Akkumulators 1 andererseits erreicht.

Der Zusatzbehälter 15 verfügt über eine in den Figuren nicht näher dargestellte Entgasungsöffnung. Die im Rahmen einer bestimmungsgemäßen Verwendung freiwerdenden Gase können über die Entgasungsöffnung ausströmen. Zusätzlicher Entgasungsöffnungen bedarf es deshalb nicht. Der Zusatzbehälter 15 erfüllt in vorteilhafter Weise insoweit zwei Funktionen. Zum einen dient er als Stopfenelement, über welches zur Vermeidung eines Überdrucks die bei einem bestimmungsgemäßen Betrieb des Akkumulators 1 entstehenden Gase abströmen können. Dabei kommen der Flüssigkeitsabscheider 20 und die Labyrinthführung 24 in vorbeschriebener Weise zum Einsatz. Der Zusatzbehälter 15 stellt in der vorbeschriebenen Weise darüber hinaus aber auch ein zusätzliches Volumen 16 zur Verfügung, das dazu dient, Elektrolyt 10 im Bedarfsfall aufzunehmen, das heißt zwischen zu speichern.

### Bezugszeichen

- 1: Akkumulator
- 2: Gehäuse
- 3: Gehäusedeckel
- 4: positive Elektrode
- 5: negative Elektrode
- 6: Höhenrichtung
- 7: Bohrung
- 8: Wandabschnitt
- 9: Dichtung
- 10: Elektrolyt
- 11: Randkante
- 12: Elektrolytspiegel
- 13: Unterseite Gehäusedeckel
- 14: zusätzliches Elektrolytvolumen
- 15: Zusatzbehälter
- 16: Volumenraum
- 17: Volumenraum
- 18: Stutzen
- 19: Überströmungskanal
- 20: Flüssigkeitsabscheider
- 21: Stäbchen
- 22: Gehäuseteil
- 23: Deckel
- 24: Labyrinthführung
- 25: Luftröhrchen
- 26: Dichtung
- 27: Aufnahme
- 28: Randkante
- 29: Rastfortsatz
- 30: Rastnocken
- 31: Dichtungsring
- ΔE: Elektrolytspiegeldifferenz

## Patentansprüche

1. Akkumulator mit einem Gehäuse (2) und einem das Gehäuse (2) fluiddicht verschließenden Gehäusedeckel (3), wobei innerhalb des Gehäuses (2) einander abwechselnd positive und negative Elektroden (4, 5) sowie ein die Elektroden (4, 5) umgebender Elektrolyt (10) angeordnet sind, aufweisend einen als Ausgleichsbehälter für den Elektrolyt (10) dienenden Zusatzbehälter (15), wobei der von dem Zusatzbehälter (15) bereitgestellte Volumenraum (16) einerseits und der vom Gehäuse (2) bereitgestellte Volumenraum (17) andererseits in strömungstechnischer Verbindung stehen, wobei der Zusatzbehälter (15) am Gehäusedeckel (3) angeordnet ist, **dadurch gekennzeichnet, dass** im Überströmungskanal (19) zwischen Zusatzbehälter (15) und Gehäuse (2) ein Flüssigkeitsabscheider (20) in Form von Stäbchen (21) angeordnet ist.

2. Akkumulator nach Anspruch 1, **dadurch gekennzeichnet, dass** im Überströmungskanal (19) zwischen Zusatzbehälter (15) und Gehäuse (2) eine Labyrinthführung (24) angeordnet ist.

3. Akkumulator nach Anspruch 2, **dadurch gekennzeichnet, dass** die Labyrinthführung (24) dem Flüssigkeitsabscheider (20) strömungstechnisch nachgeschaltet ist.

4. Akkumulator nach einem der vorhergehenden Ansprüche, **dadurch gekennzeichnet, dass** der Zusatzbehälter (15) ein Gehäuseteil (22) und einen Deckel (23) aufweist.

5. Akkumulator nach Anspruch 4, **dadurch gekennzeichnet, dass** der Deckel (23) das Gehäuseteil (22) einendseitig überragt.

6. Akkumulator nach Anspruch 4 oder 5, **dadurch gekennzeichnet, dass** der Deckel (23) aus einem Thermoplast gebildet ist.

7. Akkumulator nach einem der vorhergehenden Ansprüche, **dadurch gekennzeichnet, dass** die Labyrinthführung (24) innerhalb des Gehäuseteils (22) ausgebildet ist.

8. Akkumulator nach einem der vorhergehenden Ansprüche, **dadurch gekennzeichnet, dass** die Labyrinthführung (24) mit ihrer oberen Abschlusskante innenseitig des Deckels (23) anliegt.

9. Akkumulator nach einem der vorhergehenden Ansprüche, **dadurch gekennzeichnet, dass** der Elektrolyt (10) in einer die für einen ordnungsgemäßen Betrieb erforderliche Mindestmenge übersteigenden Menge vorgesehen ist.

10. System mit einem Akkumulator (1) und einem Zusatzbehälter (15) nach einem der vorhergehenden Ansprüche 1 bis 9.

## Claims

1. An accumulator comprising a housing (2) and a housing cover (3) which closes the housing (2) in a fluid-tight manner, wherein alternately positive and negative electrodes (4, 5) as well as an electrolyte (10) which surrounds the electrodes (4, 5) are located inside the housing (2), comprising an additional tank (10) which serves as compensation tank for the electrolyte (10), wherein the volume space (16) provided by the additional tank (15), on the one hand, and the volume space (17) provided by the housing (2), on the other hand, are in fluidic connection, wherein the additional tank (15) is mounted on the housing cover (3), **characterized in that** a liquid separator (20) in form of small rods (21) is arranged in the connection channel (19) between the additional tank (15) and the housing (2).

2. An accumulator according to claim 1, **characterized in that** a labyrinth guideway (24) is arranged in the connection channel (19) between the additional tank (15) and the housing (2).

3. An accumulator according to claim 2, **characterized in that** the labyrinth guideway (24) is arranged fluidically downstream of the liquid separator (20).

4. An accumulator according to one of the preceding claims, **characterized in that** the additional tank (15) comprises a housing part (22) and a cover (23).

5. An accumulator according to claim 4, **characterized in that** the cover (23) projects beyond the housing part (22) on the side of one end.

6. An accumulator according to claim 4 or 5, **characterized in that** the cover (23) is made of a thermoplastic.

7. An accumulator according to one of the preceding claims, **characterized in that** the labyrinth guideway (24) is formed inside the housing part (22).

8. An accumulator according to one of the preceding claims, **characterized in that** the upper edge of the labyrinth guideway (24) rests against the inner surface of the cover (23).

9. An accumulator according to one of the preceding claims, **characterized in that** an amount of electrolyte (10) is provided which exceeds the minimum amount that is required for a proper operation.

10. A system comprising an accumulator (1) and an additional tank (15) according to one of the preceding claims 1 through 9.

## Revendications

1. Accumulateur comprenant un boîtier (2) et un couvercle de boîtier (3) qui ferme le boîtier de manière étanche au fluide, des électrodes positives et négatives (4, 5) en alternance et un électrolyte (4, 5) entourant les électrodes (4, 5) étant disposés à l'intérieur du boîtier (2), comprenant un récipient supplémentaire (15) servant de récipient de compensation pour l'électrolyte (10), l'espace de volume (16) fourni par le récipient supplémentaire (15) d'une part et l'espace de volume (17) fourni par le boîtier (2) d'autre part étant en liaison fluidique, le récipient supplémentaire (15) étant disposé sur le couvercle de boîtier (3), **caractérisé en ce qu'**un séparateur de liquides (20) sous forme de baguettes (21) est disposé dans le canal de liaison (19) entre le récipient supplémentaire (15) et le boîtier (2).

2. Accumulateur selon la revendication 1, **caractérisé en ce qu'**un guidage en labyrinthe (24) est disposé dans le canal de liaison (19) entre le récipient supplémentaire (15) et le boîtier (2).

3. Accumulateur selon la revendication 2, **caractérisé en ce que** le guidage en labyrinthe (24) est monté sur le plan fluidique en aval du séparateur de liquides (20).

4. Accumulateur selon l'une des revendications précédentes, **caractérisé en ce que** le récipient supplémentaire (15) comprend un élément de boîtier (22) et un couvercle (23).

5. Accumulateur selon la revendication 4, **caractérisé en ce que** le couvercle (23) s'étend au-delà de l'élément de boîtier (22) sur un côté d'extrémité.

6. Accumulateur selon la revendication 4 ou la revendication 5, **caractérisé en ce que** le couvercle (23) est fabriqué en une matière thermoplastique.

7. Accumulateur selon l'une des revendications précédentes, **caractérisé en ce que** le guidage en labyrinthe (24) est formé à l'intérieur de l'élément de boîtier (22).

8. Accumulateur selon l'une des revendications précédentes, **caractérisé en ce que** le bord terminal supérieur du guidage en labyrinthe (24) s'appuie contre la surface intérieure du couvercle (23).

9. Accumulateur selon l'une des revendications précédentes, **caractérisé en ce qu'**une quantité d'électrolyte (10) est prévue qui excède la quantité minimum qui est nécessaire pour un bon fonctionnement.

10. Système comprenant un accumulateur (1) et un récipient supplémentaire (15) selon l'une des revendications précédentes 1 à 9.
